# EUROPEAN PATENT SPECIFICATION

(11) **EP 3 824 028 B1**
(45) Date of publication and mention of the grant of the patent: **26.02.2025**
(21) Application number: 19742203.3
(22) Date of filing: 19.07.2019
(51) Int. Cl.: C08L 7/00, C08K 3/04, C08K 3/36, C08K 5/10, C08K 5/1515, C08K 5/54, C08L 9/00, C08L 9/06, B60C 1/00, C08K 5/18

(54) **RUBBER COMPOSITION FOR TYRES COMPRISING MODIFIED UNSATURATED OILS**
KAUTSCHUKZUSAMMENSETZUNG FÜR REIFEN MIT MODIFIZIERTEN UNGESÄTTIGTEN ÖLEN
COMPOSITION DE CAOUTCHOUC POUR PNEUMATIQUES, COMPORTANT DES HUILES INSATURÉES MODIFIÉES

(30) Priority: 20.07.2018 LU 100884
(43) Date of publication of application: 26.05.2021
(73) Proprietor: Apollo Tyres Global R&D B.V., 7521 PT Enschede (NL)
(72) Inventor: HAYICHELAEH, Chesidi, Muang Pattani, 94000 (TH); SAHAKARO, Kannika, Muang Pattani, 94000 (TH); NOORDERMEER, Jacques W. M., 6118 BV Nieuwstadt (NL); REUVEKAMP, Louis A. E. M., 7546 GE Enschede (NL); BLUME, Anke, 53919 Weilerswist (DE)
(74) Representative: Michalski Hüttermann & Partner Patentanwälte mbB
(86) International application number: PCT/EP2019/069573
(87) International publication number: WO 2020/016439

(56) References cited:
- EP-A1- 1 072 442
- EP-A1- 2 792 689
- EP-A1- 3 251 872
- DATABASE WPI Week 200935, Derwent World Patents Index; AN 2009-J69177, XP002789729
- DATABASE WPI Week 201224, Derwent World Patents Index; AN 2011-K48847, XP002789730
- DATABASE WPI Week 201444, Derwent World Patents Index; AN 2014-M33068, XP002789731
- DATABASE WPI Week 201451, Derwent World Patents Index; AN 2014-N61832, XP002789732
- DATABASE WPI Week 201010, Derwent World Patents Index; AN 2009-R37553, XP002789733
- SUPAPORN IEADSANG ET AL: "Influence of N-phenyl-p-phenylenediamine Modified Epoxidized Palm Oil on Properties of Carbon Black Filled Natural Rubber Compound and Vulcanizate", ADVANCED MATERIALS RESEARCH, vol. 844, 15 November 2013 (2013-11-15), Switzerland, pages 239 - 242, XP002789734, ISSN: 1662-8985, DOI: 10.4028/www.scientific.net/AMR.844.239
- SABRINA SOLOI ET AL: "Novel Palm Oil Based polyols with Amide functionality", INTERNATIONAL JOURNAL OF SCIENCES: BASIC AND APPLIED RESEARCH (IJSBAR), vol. 37, no. 1, 15 January 2018 (2018-01-15), pages 74 - 86, XP002789735, ISSN: 2307-4531

## Description

The present invention relates to a cross-linkable rubber composition, a cross-linked rubber composition obtained by cross-linking such a rubber composition, a method of preparing a tyre and a tyre.

Tread rubber is one of the important portions of a pneumatic tyre which contributes enormously to the overall performance of a tyre. A tyre has to perform well in severe weather conditions and it has to exhibit a variety of performances such as wet grip, abrasion resistance and low rolling resistance. In addition, further requirements for all-season and winter tyres are required, such as retaining good performance on snow and ice.

After a ban of distillate aromatic extract (DAE) oil containing polycyclic aromatic hydrocarbons (PAHs) for the production of tyres or parts of tyres after 1 January 2010 (European Directive 2005/69/EC), the safe process oils such as treated distillate aromatic extract (TDAE), mild extracted solvate (MES) and naphthenic (NAP) oils are the alternatives. However, due to scarceness of the supply of petroleum-based process oils in the near future and a need for more sustainable tyre compositions, natural oils, especially plant or vegetable-based oils, have been considered as alternative process oils for rubber compounds.

For rubber-tyre technology, carbon black has been conventionally used as reinforcing filler for a long time. Lately, silica-reinforced tyre tread compounds show improvement of key tyre performance, i.e. lower rolling resistance and better wet traction while maintaining the abrasion resistance when compared to the carbon black-filled tyre compounds. A reduction of rolling resistance of about 20% of the silica-filled tyre rubber compared with the use of carbon black can save 3-4% of fuel.

For silica-silane technology in the silica-reinforced rubber compounds for low rolling resistance tyre treads, reactions take place between the alkoxy groups in the silane coupling agents and the silanol groups on the silica surface via condensation reaction, the so-called silanization, and a coupling reaction takes place between the silane moieties with the rubber molecules. The silanization usually takes place during mixing and it is known that basic conditions or alkalinity have a catalytic effect on the condensation reaction. An effective silanization leads to an improved compatibility between the silica surface and the rubber molecule or to enhanced silica-rubber interactions.

Process oils are generally added into the rubber compounds with high loading of fillers to improve the processability and dispersibility of fillers in the rubber matrix. The petroleum-based distillate aromatic extract (DAE) was conventionally used in carbon black-filled tyre compounds. Based on the report of investigation on tyre particles on the road surface by The Swedish National Chemicals Inspectorate (2003), the DAE oil contains polycyclic aromatic hydrocarbons (PAHs) in which some of them are already classified as carcinogenic substances. Thereafter, the DAE oil has been banned for the production of tyres or parts of tyres and shall not be placed on the market from 1 January 2010 according to Directive 2005/69/EC. The safe process oils such as treated distillate aromatic extract (TDAE), mild extracted solvate (MES) and naphthenic (NAP) oils are the alternatives.

In anticipation of a scarceness of the supply of petroleum-based process oils in the near future and a need for more sustainable tyre compositions, natural oils especially plant or vegetable-based oils have been considered as alternative process oils for rubber compounds.

However, the plant- or vegetable-oils contain some unsaturated fatty whose double bonds could react with the curing agent and interfere the vulcanization reaction. This can be addressed by modifying the oil structure to reduce the double bond and to increase the compatibility between the oil and rubber as well as filler. One modification methods that is widely used for bio-oils is epoxidation.

The publication by A. Wae-chi., A. Rungwichaniwat., K. Sahakaro, "Chemically modified natural-based safe process oils in carbon black filled-natural rubber/styrene butadiene rubber blends", RubberCon 2013, Royal Orchid Sheraton, Bangkok, 16-18 December 2013 is concerned with the use of such oils in carbon black-filled NR/SBR rubber blends.

The publication by S. Ieadsang, A. Thitithammawong, C. Nakason, A. Kaesaman "Influence of N-Phenyl-p-Phenylenediamine modified epoxidized palm oil on properties of carbon black filled natural rubber compound and vulcanizate", Advanced Materials Research, 844, 239-242 (2014) discloses the use of such a modified oil in carbon black-filled NR compounds.

The publication by C. Moojea-Te, A. Rungvichaniwat, K. Sahakaro "Influence of processing oil based on modified epoxidized vegetable oil with N-phenyl-p-phenylenediamine (PPD) on extrusion process behaviors of natural rubber compounds", Key Engineering Materials, 659, 423-427 (2015) focuses on the use in carbon black-filled natural rubber compounds with an emphasis on extrusion behaviors.

The publication by A. Thitithammawong, C. Nakason, C. Hayichelaeh "Influence of oxirane ring and phenylenediamine structures in modified palm processing oils on properties of ENR/PP TPVs", Macromolecular Symposia, 354, 21-27 (2015) relates to blends of polypropylene (PP) and epoxidized natural rubber (ENR).

EP 2 340 946 A1 discloses a pneumatic tire comprising at least one component selected from the group consisting of beads, apexes, and sidewall veneers, the at least one component comprising a rubber composition, the rubber composition comprising at least one diene based elastomer, an epoxidized palm oil and less than 1 phr of stearic acid.

EP 2 792 689 A1 discloses an oil extended functionalized styrene-butadiene copolymer wherein the functionalized styrene-butadiene copolymer comprises 15 to 50 wt.%, based on 100 wt.% of the copolymer, of repeating units based on styrene, 42 to 80 wt.%, based on 100 wt.% of the copolymer, of repeating units based on butadiene, and 5 to 43 wt.%, based on 100 wt.% of the copolymer, of units based on at least one functional monomer and wherein at least one extender oil is based on vegetable oils.

EP 1 072 442 A1 discloses a rubber composition with excellent workability, which gives vulcanized products with high wet skid resistance, low rolling resistance and high abrasion resistance, and a tire with those excellent properties. The rubber composition comprising a diene-based rubber (a), silica (b) and a compatibilizer (c). Said compatibilizer (c) is at least one selected from among (I) Aminosilane compounds; (II) Epoxy group-containing compounds; (III)(IV) Compounds which have an amino group or a polymerizable unsaturated bond, together with a hydroxyl group, an epoxy group, an ether bond, a carboxyl group, an ester bond or a polymerizable unsaturated bond in the molecule; (V) Ether bond-containing compounds; and (VI) Carboxylates.

EP 3 251 872 A1 discloses a vulcanizable rubber composition for use in a tread of a pneumatic tire is disclosed. The rubber composition comprises, based on 100 parts by weight of elastomer (phr), 100 phr of a diene based elastomer having a glass transition temperature of less than -50 °C; from 30 phr to 65 phr of a fatty acid monoester of formula (1) R¹-O-C(O)-R² (1), where R¹ is selected from a C1 to a C8 linear or branched alkyl, a C1 to a C8 linear or branched alkenyl, or a C2 to a C6 linear or branched alkyl substituted with from one to five hydroxyl groups, R² is a C11 to a C21 alkyl or a C11 to a C21 alkenyl; less than 10 phr of a petroleum-derived oil; and from 50 to 130 phr of silica.

The present invention has the object of providing a cross-linkable rubber composition which may be used as a tread rubber in a tyre where petroleum-based process oils can be used in a lower amount or can be omitted entirely.

This object is achieved by a cross-linkable rubber composition according to claim 1, a cross-linked rubber composition according to claim 7, a method according to claim 13 and a tyre according to claim 14. Advantageous embodiments are the subject of dependent claims. They may be combined freely unless the context clearly indicates otherwise.

Accordingly, a cross-linkable rubber composition comprises:
a rubber component selected from the group of styrene-butadiene rubber (SBR), polybutadiene rubber (BR), natural rubber (NR) or a mixture thereof;
a filler component,
a silane coupling agent and
a process oil component comprising an unsaturated fatty acid triglyceride where at least one carbon-carbon double bond in the molecule has been subjected to one or more chemical reactions ("modified unsaturated oil");

wherein the filler component comprises silica,
the filler component comprises ≥ 0 phr to ≤ 25 (preferably ≥ 0 phr to ≤ 10 phr) of carbon black,
as the modified unsaturated oil in the process oil component is used:
   a stoichiometrically complete or partial reaction product of an epoxide of an unsaturated fatty acid triglyceride with a molecule containing a nucleophilic group, wherein the molecule containing a nucleophilic group is a primary aromatic amine,
   or a mixture thereof with an epoxide of an unsaturated fatty acid triglyceride
and the process oil component comprises ≥ 0 phr to ≤ 25 phr (preferably ≥ 0 phr to ≤ 10 phr) of treated distilled aromatic extract (TDAE), mild extracted solvate (MES) and naphthenic (NAP) oils.

The unit "phr" denotes "per hundred parts by weight of rubber".

It has surprisingly been found that the modified unsaturated oils according to the invention permit the substantial or complete substitution of petrochemically-based process oils in silica-filled rubber formulations with little or no carbon black fillers without a negative change of the rubber properties as they relate to tyre treads. Specific properties such as tan delta values at 60 °C (equating to a lower rolling resistance) are even lowered (improved).

Without wishing to be bound by theory it is believed that because the epoxidized oils contain less double bonds and increased polarity they exhibit a positive effect on the vulcanization and silica-oil compatibility. Moreover, the further modification of epoxidized oil is believed to additionally help to promote the silanization reaction or to enhance hydrophobation by the oil adsorption.

The cross-linkable rubber composition according to the invention comprises cross-linkable groups in the individual rubber components. They may be cross-linked (cured, vulcanised) by methods known to a skilled person in the rubber technology field. The cross-linkable rubber compositions may be sulfur-vulcanizable and/or peroxide-vulcanizable. Other vulcanization systems may also be used. If desired, additives can be added. Examples of usual additives are stabilizers, antioxidants, lubricants, fillers, dyes, pigments, flame retardants, conductive fibres and reinforcing fibres.

The SBR rubber component may contain one type of SBR rubber or several different types. Preferably, at least one type of SBR rubber is manufactured according to the solution process (SSBR or solution SBR). Likewise, the BR rubber component may contain one type of BR rubber or several different types.

It is further understood that in formulations discussed in connection with the present invention the phr amount of all rubber components adds up to 100.

The cross-linkable rubber composition also comprises a silane coupling agent. Particularly suitable silane compounds comprise di- and tetrasulphides and mercaptosilanes. In an embodiment of the cross-linkable rubber composition the silane coupling agent is a trialkoxymercaptoalkyl silane, bis[3-(triethoxysilyl)propyl] tetrasulfide (TESPT), bis (3-triethoxysilylpropyl) disulfide (TESPD), bis(trimethylsilylmethyl) tetrasulfide (TMSMT), 3-mercaptopropyltriethoxy silane, γ-glycidyloxypropyl trimethoxy silane, vinyl tri(2-methoxyethoxy) silane, γ-methacryloxypropyl trimethoxy silane, octyltriethoxysilane, aminopropyl triethoxy silane, 3-octanoyl-thio-propyltriethoxysilane (NXT), 3-mercaptopropyl-di(tridecan-1-oxy-13-penta(ethyleneoxide))ethoxysilane (VP Si-363) or a mixture of at least two of the aforementioned components.

The modified unsaturated oil according to the invention can be an epoxide of an unsaturated fatty acid triglyceride (also designated as unsaturated fat or unsaturated oil). In the triglyceride, one, two or three fatty acids may contain C=C double bonds for epoxidization. The epoxidization may be complete, i.e. 100% of available C=C double bonds in the fatty acid triglyceride have been converted, or incomplete, i.e. the fatty acid triglyceride contains epoxy groups and C=C double bonds. The incomplete case is preferred.

The modified unsaturated oil may also be further modified in the sense that a molecule containing a nucleophilic group such as an OH group, an NH₂ group or an SH group reacts with the epoxidized fatty acid triglyceride. This reaction may be stoichiometrically complete, i.e. all epoxy groups have undergone the ring-opening addition of the nucleophilic species. Alternatively, the reaction may also be stoichiometrically incomplete, meaning that the modified unsaturated oil comprises epoxy groups and the products of the ring-opening addition. Of course, C=C double bonds may also still be present in these modified unsaturated oils.

By the epoxidation reaction, the epoxidized oil has a more saturated structure and higher polarity due to a change of double bonds into the epoxide rings which can interact with the silanol groups of the silica surface. For silica/silane-reinforced rubber compounds in which the reaction between the silanol groups on the silica surface and the alkoxy groups on the silane molecules, i.e. the silanization reaction, is preferably promoted. The presence of amines such as diphenyl guanidines or linear aliphatic amines can act as the silanization booster.

In particular, to replace the petroleum-based process oil with bio-based oil in silica-reinforced rubber compounds, an amine-modified epoxidized palm oil (m-EPO) may be selected based on the assumption that the amine functionality attached to the oil molecules may act as a silanization and vulcanization booster, and later to enhance hydrophobation of the silica surface due to the adsorption of amine-modified oil after the silanization. The palm oil may be selected as a base material for modification due to its high proportion of saturated fatty acids over the unsaturated ones (43.4/56.6).

According to the invention the filler component comprises ≥ 0 phr to ≤ 25 phr, preferably ≥ 0 phr to ≤ 10 phr, of carbon black.

Furthermore, the process oil component comprises ≥ 0 phr to ≤ 25 phr (preferably ≥ 0 phr to ≤ 10 phr) of treated distillate aromatic extract (TDAE) , mild extracted solvate (MES) and naphthenic (NAP) oils. Particularly preferred are ≥ 0 phr to ≤ 1 phr, more preferred ≥ 0 phr to ≤ 0.1 phr. In essence, it is most preferred that the filler component is free from these oils with the exception of any technically unavoidable impurities as they may arise in a rubber processing facility.

In one embodiment the unsaturated fatty acid triglyceride used as starting material for the modified unsaturated oil is a glyceride of α-linolenic acid, stearidonic acid, eicosapentaenoic acid, docosahexaenoic acid, linoleic acid, linolelaidic acid, γ-linolenic acid, dihomo-γ-linolenic acid, arachidonic acid, docosatetraenoic acid, palmitoleic acid, accenic acid, paullinic acid, oleic acid, elaidic acid, gondoic acid, erucic acid, nervonic acid, mead acid or a mixture thereof.

In another embodiment the unsaturated fatty acid triglyceride used as starting material for the modified unsaturated oil is olive oil, peanut oil, soybean oil, sesame oil, corn oil, sunflower oil, canola oil, palm oil or a mixture thereof.

In another embodiment the modified unsaturated oil comprises ≥ 1 mol-% to ≤ 10 mol-% of epoxy groups, based on the molar amount of unsaturated fatty acid trigliceride uses as starting material in its synthesis. Preferred are ≥ 2 mol-% to ≤ 7 mol-%, more preferred ≥ 3 mol-% to ≤ 5 mol-%.

In another embodiment the modified unsaturated oil is the reaction product of ≥ 0.01 mol to ≤ 0.1 mol of the molecule containing a nucleophilic group per 1000 g of the epoxide of an unsaturated fatty acid triglyceride. Preferred are ≥ 0.02 mol to ≤ 0.08 mol, more preferred ≥ 0.03 mol to ≤ 0.05 mol.

In another embodiment the molecule containing a nucleophilic group is a primary aromatic amine. Preferred are amines of the PPD type such as with N-phenyl-p-phenylenediamine. Other types of phenylenediamine, preferably p-phenylenediamine or aliphatic diamines are also suitable. These amines have the additional advantage of providing antioxidant properties.

In another embodiment the cross-linkable rubber composition according to the invention comprises:

| | |
|---|---|
| Natural rubber (NR) | ≥ 50 phr to ≤ 100 phr |
| Styrene butadiene rubber (SBR), butadiene rubber (BR), isoprene rubber (IR) or a mixture of at least two of the aforementioned rubbers | ≥ 0 phr to ≤ 50 phr |
| Silica | ≥ 40 phr to ≤ 130 phr (preferably ≥ 50 phr to ≤ 60 phr) |
| Bis[3-(triethoxysilyl)propyl] tetrasulfide (TESPT) | ≥ 1 phr to ≤ 13 phr (preferably ≥ 2 phr to ≤ 10 phr) |
| Epoxidized palm oil, a reaction product of epoxidized palm oil with N-phenyl-p-phenylenediamine (PPD) or a mixture thereof | ≥ 5 phr to ≤ 20 phr |
| Carbon black | ≥ 0 phr to ≤ 10 phr |
| Treated distilled aromatic extract (TDAE), mild extracted solvate (MES) and naphthenic (NAP) oils | ≥ 0 phr to ≤ 10 phr |

The invention is also directed towards a cross-linked rubber composition which is obtained by cross-linking a rubber composition according to the invention.

In one embodiment the cross-linked rubber composition has a difference in storage moduli G' at 0.56% elongation and 100% elongation of ≥ 250 kPa, the storage moduli being determined at a temperature of 100 °C and a frequency of 0.5 Hz. The difference in storage moduli at low and high strains, for instance G'(at 0.56%)-G'(at 100%), is called the Payne effect and can be taken as a measure for the level of filler-filler interaction within the rubber compounds. The Payne effect can be determined with a rubber process analyzer (RPA) using uncured compounds. Preferably the difference is ≥ 250 kPa to ≤ 350 kPa, more preferred ≥ 260 kPa to ≤ 340 kPa.

In another embodiment the cross-linked rubber composition has a tensile strength according to ASTM D412 of ≥ 24 MPa. Preferably the modulus is ≥ 25 MPa to ≤ 30 MPa. Furthermore, the **modulus** at 100% elongation according to this testing procedure may be ≥ 1.7 MPa to ≤ 2.0 MPa, the modulus at 200% elongation ≥ 4.5 MPa to ≤ 6.0 MPa and the modulus at 300% elongation may be ≥ 9.5 MPa to ≤ 12.0 MPa.

In another embodiment the cross-linked rubber composition has an elongation at break according to ASTM D412 of ≥ 480%. Preferably the elongation at break is ≥ 500% to ≤ 600%, more preferred ≥ 520% to ≤ 580%.

In another embodiment the cross-linked rubber composition has a maximum of the tan delta value (determined from DMA measurements according to ISO 4664-1, frequency 10 Hz, 0.1% dynamic strain) at ≥ -80 °C to ≤ -20 °C, preferably ≥ -60 °C to ≤ -50 °C.

In another embodiment the cross-linked rubber composition has a tan delta at 0 °C of ≥ 0.1 to ≤ 0.15 (determined from DMA measurements according to ISO 4664-1, frequency 10 Hz, 0.1% dynamic strain) and a tan delta at 60 °C of ≥ 0.05 to ≤ 0.15 (determined from DMA measurements according to ISO 4664-1, frequency 10 Hz, 1 % dynamic strain). Preferred are tan delta values at 0 °C of ≥ 0.11 to ≤ 0.12 and at 60 °C of ≥0.06 to ≤ 0.08.

The present invention also relates to a method of preparing a tyre, comprising the steps of:
- providing a tyre assembly comprising a cross-linkable rubber composition according to the invention;
- cross-linking at least the crosslinkable rubber composition according to the invention in the tyre assembly.

Another aspect of the invention is a tyre comprising a tyre tread, wherein the tyre tread comprises a cross-linked rubber composition according to the invention.

The present invention will be further described with reference to the following figures and examples without wishing to be limited by them.
- FIG. 1: shows storage moduli at varying strain of silica-reinforced rubber tyre compounds with different process oils
- FIG. 2: shows Payne effects of silica-reinforced rubber tyre compounds with different process oils
- FIG. 3: shows cure characteristics of silica-reinforced rubber tyre compounds with different process oils
- FIG. 4: shows mechanical properties of silica-reinforced rubber tyre compounds with different process oils
- FIG. 5: shows elongations at break of silica-reinforced rubber tyre compounds with different process oils
- FIG. 6: shows tan δ values of silica-reinforced rubber tyre compounds with different process oils as analysed by DMA under temperature sweep
- FIG. 7: shows tan δ values at 60°C of silica-reinforced rubber tyre compounds with different process oils as analysed by RPA under frequency sweep

### Methods:

Payne effect: The storage shear moduli (G') of rubber compounds without curatives was evaluated by using Rubber Process Analyzer (RPA) (Alpha Technologies, Akron, USA) under the temperature of 100 °C, frequency of 0.5 Hz and varying strains in the range of 0.28-100%. The Payne effect was calculated from different storage shear moduli at low strain (0.56%) and high strain (100%).

Cure behaviors: Cure behaviors were tested using RPA at 150 °C, frequency 0.833 Hz and 2.79% strain according to ASTM D5289-95.

Mechanical properties: Type 2 dumb-bell test specimens were prepared and then tensile properties were tested with a Zwick tensile tester Model Z1.0/TH1S (Zwick Roell Group, Ulm, Germany) at a crosshead speed of 500 mm/min according to ASTM D412.

Dynamic mechanical properties by DMA: Dynamic mechanical properties of silica-reinforced rubber compounds were characterized in tension mode using a 6x4x2 mm³ test specimen. The test was conducted with DMA8000 (Perkin Elmer) at a frequency of 10 Hz and 0.1% strain in a temperature range of -80 to 100 °C.

Dynamic mechanical property by RPA: The loss tangent of the rubber vulcanizates was determined using RPA at 60 °C and a strain of 3.49% with varying frequencies in the range of 0.05-33 Hz. The rubber compounds were cured prior to the loss tangent measurement in the PRA chamber at 150 °C to their respective optimum cure times.

### Materials:

Silica-reinforced rubber tyre compounds were prepared. The rubber compounding formulations are NR (natural rubber; 100 phr), silica (55 phr), TESPT (bis[3-(triethoxysilyl)propyl] tetrasulfide; 5 phr), ZnO (3 phr), stearic acid (1 phr), TMQ (1,2-dihydro-2,2,4-trimethylquinoline polymer; 1 phr), process oil* (8 phr), OCT (octadecylamine; 1.0 phr), CBS (N-cyclohexyl-2-benzothiazole sulfenamide; 1.5 phr) and sulfur (1.5 phr). In this study, the octadecylamine (OCT) was used as diphenylguanidine (DPG) alternative to give the rubber compounds having less toxic ingredients and becoming a more green product.

*Different types of process oils used in this study were treated distilled aromatic extract (TDAE), epoxidized palm oil with 3 mole % epoxide groups (EPO3%), amine-modified epoxidized palm oil with 0.03 mol of amine in 1000 g of EPO3% (0.03 mEPO), and amine-modified epoxidized palm oil with 0.04 mol of amine in 1000 g of EPO3% (0.04 mEPO).

### 1) Preparation of epoxidized palm oil (EPO)

The epoxidation reaction was carried out using peracid generated from formic acid and hydrogen peroxide. 150 g of palm oil was added into a three necked flask (250 mL capacity) equipped with a mechanical stirrer, thermometer and reflux condenser at 45 °C. Then, the palm oil was acidified with formic acid under continuous stirring. Hydrogen peroxide was subsequently slowly added dropwise. The molar ratio of palm oil: HCOOH: H₂O₂ was 1:2:4. Fast introduction of H₂O₂ should be avoided as it causes an excessive development of oxygen due to the decomposition of the peroxide. After reaching the reaction time of 3 hrs, the reaction mixture was taken out from the reactor, thoroughly washed with sodium bicarbonate (5 wt%), distilled water and sodium chloride (5 wt%) to separate the organic layer from the mixture.

### 2) Preparation of amine-modified EPO

The amine-modified EPO was synthesized by reacting the EPO with N-phenyl-p-phenylenediamine (PPD) having zinc chloride (ZnCl₂) as catalyst. The weight ratio of EPO: PPD: ZnCl₂ was fixed at 10:1:0.5. The reaction mixture was heated at 100 °C for 3 and 5 hrs, respectively, under continuous stirring. After that, the ZnCl₂ was separated by filtration through a cotton wool. The unreacted PPD in the oils was eliminated by absorbing with silica gel. In this step, the crude modified oil was diluted with a mixture of hexane and diethylacetate (1/1) before passing through the column packed with the silica gel. The solvent was finally eliminated by rotary evaporator.

The modified oils were characterized to confirm the presence of the functional groups by means of FTIR and¹H NMR. The bio-based oils obtained were then used for rubber compounding.

Raw NR was first masticated in an internal mixer (Brabender Plasticorder 350s) for 2 min with the mixing conditions of fill factor 0.70, initial mixer temperature setting of 100 °C and rotor speed of 60 rpm. Then, a half of silica and a half of TESPT together with a quarter of octadecylamine were added in the mixing chamber and mixed for 5 min. Subsequently, the remaining of silica and TESPT with a quarter of octadecylamine were incorporated and mixed for 5 mins prior to the addition of ZnO, stearic acid, TMQ and process oil into the rubber compounds.

The rubber compound mixed in the internal mixer was discharged at 15 mins. The curing agents, i.e. CBS, sulfur and remaining octadecylamine, were finally mixed into the rubber compound on a two-roll mill. Afterwards, the rubbers were cured the rubbers were cured to their respective optimum cure time (t₉₀) by using a compression press at 150 °C and 100 bar.

### Results:

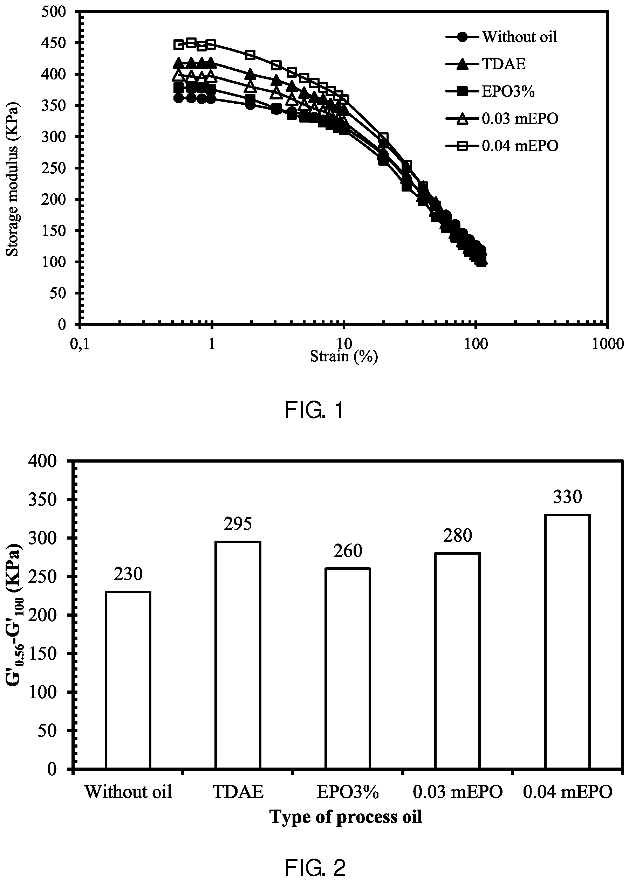

FIG. 1 shows a reduction of the storage moduli with increasing strain of different compounds due to a breakdown of filler network and slip of polymer chains on the filler surface under dynamic deformation. A breakdown of filler network diminishes filler-filler interaction, allowing a better dispersion of filler in the rubber matrix.

The difference in storage moduli at low and high strains, that is, G'(at 0.56%)-G'(at 100%), the so-called Payne effect, can be taken as a measure for the level of filler-filler interaction within the rubber compounds, as shown in FIG. 2. The Payne effect of the silica-filled rubber compounds is normally used to explain the degree of filler-filler interactions that are mainly caused by hydrogen bonding, leading to formation of the filler network in the rubber matrix. The rubber compounds with EPO3% and 0.03 mEPO show lower Payne effect than the compound with TDAE oil, but the mix with 0.04 mEPO shows higher value. When compared among the compounds with process oils, the use of EPO and 0.03mEPO gives lower, i.e. better, Payne effect compared to state-of-the-art TDAE. But too many functional groups that lead to higher polarity have a detrimental effect. In the case of without oil, the compound was subjected to higher shear force during mixing because of higher viscosity and thus resulted in greater breakdown of both filler network and rubber molecules. This highlights the advantages of the invention over TDAE.

During curing, the rubber compounds without oil shows shorter scorch time but higher cure time and slower cure rate than the ones with process oils. This means that the presence of process oil in the rubber compounds improves the cure behaviour. The rubber compounds with process oils show similar scorch time and cure time. The compounds with amine-modified EPO show shorter cure time than the mix with EPO presumably due to the presence of alkaline amine in the oil structure that helps to promote the cure reaction. In addition, the rubber compositions comprising of amine-modified (m-EPO) have higher cure reaction rate and higher extent of cure torque increase (M_{H}-M_{L}) compared to the compound with state-of-the-art TDAE. The increase of cure torque indicates crosslink density within the rubber matrix. The inventive use of mEPO is better than without oil and with TDAE as indicated by faster cure rate and higher cure torque increase (indicative for crosslink density).

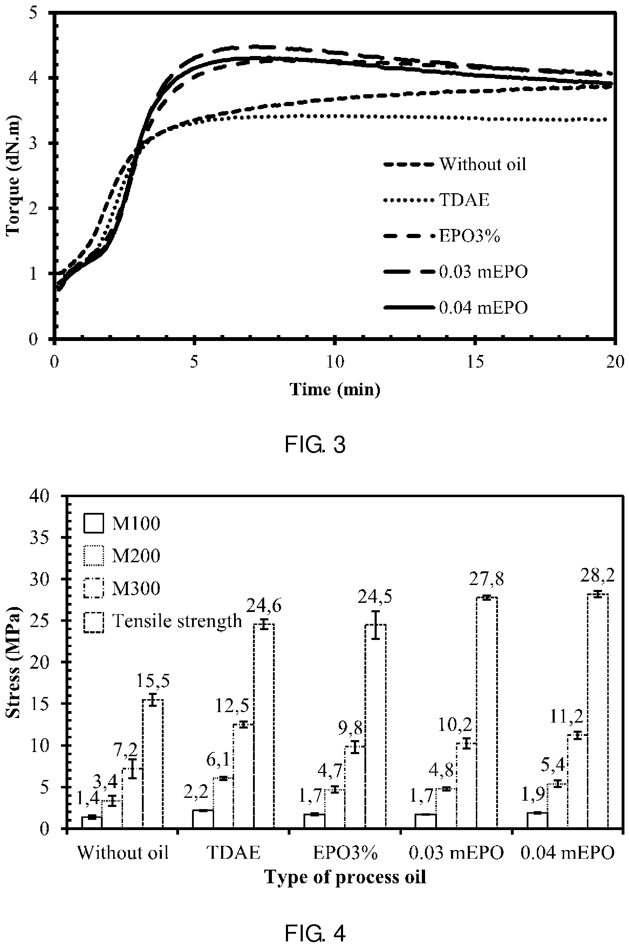

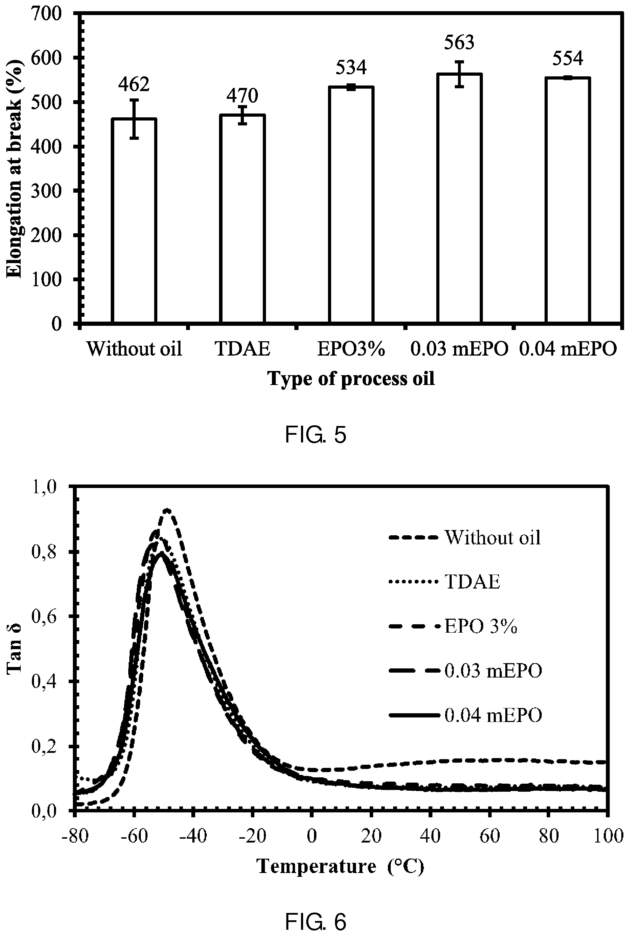

The mechanical properties, i.e. moduli at different strains, tensile strength and elongation at break, are shown in FIG. 4 and FIG. 5. The presence of process oils gives a positive effect on the improvement of mechanical properties. The rubber compounds with process oils show higher modulus, tensile strength and elongation at break than the compound without oil. The silica-filled vulcanizates with m-EPO have excellent tensile strength and elongation at break compared to the compound with TDAE due to the improvement in the filler dispersion as well as the crosslink density as indicated by the cure torque difference (FIG. 3) within the rubber matrix.

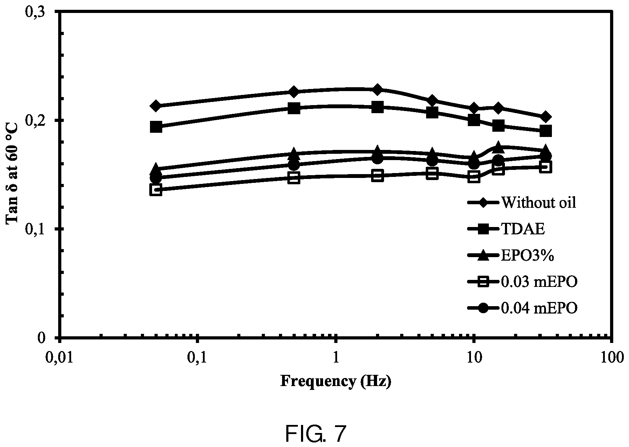

The loss tangent or tan delta values of silica-reinforced rubber compounds with different process oils were tested by using Dynamic Mechanical Analyzer (DMA) and Rubber Process Analyzer (RPA), as shown in FIG. 6 and FIG. 7. The presence of process oils causes a slight shift of the glass transition temperature towards lower value due to the increased mobility of the rubber chains, compared to the compound without oil. In the lab-scale test, the loss tangent values at 0 and 60 °C of rubber vulcanizate are commonly used as indicative for wet grip and rolling resistance, respectively. The results show that the use of all process oil types gives better rolling resistance than the compound without oil with slightly inferior wet grip due to the increased in rubber elasticity. The compositions comprising m-EPO display similar dynamic mechanical properties to the reference compound with TDAE as determined by DMA. But based on RPA tested over a range of frequencies, the use of m-EPO give lower loss tangent at 60°C compared to TDAE; a potential for lower rolling resistance tyre tread made thereof.

In conclusion, tyre compounds comprising EPO and 0.03 mEPO have lower Payne effect than the one with TDAE. The presence of process oils in the rubber compounds shows an improvement on the cure behaviour. The rubber compounds with amine-modified (m-EPO) have higher cure reaction rate and higher extent of cure torque increase (M_{H}-M_{L}), indicative for crosslink density, compared to the compound with state-of-the-art TDAE. The amine moiety grafted on the modified process oil molecule has an acceleration effect on the vulcanization resulting in faster cure time compared to other compounds. The rubber compounds with process oils show better mechanical properties, i.e. modulus, tensile strength and elongation at break, and lower (better) loss tangent at 60°C compared to the rubber compound without oil due to a reduction of filler-filler interaction and an increase of crosslink density. The rubber compound with 0.03 mEPO shows better mechanical and dynamic mechanical properties than the compound with TDAE oil. Based on RPA tested over a range of frequencies, the use of m-EPO give lower tan delta at 60°C compared to TDAE; a potential for lower rolling resistance tyre tread made thereof.

The use of amine modified-epoxidized palm oil as a process oil in the silica-reinforced rubber tyre compounds gives better properties when compared to the use of state-of-the-art petroleum-based TDAE oil. The rubber compounds with EPO3% and 0.03 mEPO show lower Payne effect than the compound with TDAE oil. The rubber compounds with modified oils show the enhanced cure properties, i.e. increased cure rate and higher cure torque difference, resulting in good end-use properties especially tan delta at 60 °C which is an indication for tyre rolling resistance. The amine-modified EPO gives overall better properties than EPO and can be a potential alternative for TDAE in order to produce rubber compositions comprising biosource component towards better sustainability.

## Claims

1. A cross-linkable rubber composition, the cross-linkable rubber composition comprising:
a rubber component selected from the group of styrene-butadiene rubber (SBR), polybutadiene rubber (BR), natural rubber (NR) or a mixture thereof;
a filler component,
a silane coupling agent and
a process oil component comprising an unsaturated fatty acid triglyceride where at least one carbon-carbon double bond in the molecule has been subjected to one or more chemical reactions ("modified unsaturated oil");
**characterised in that**
the filler component comprises silica,
the filler component comprises ≥ 0 phr to ≤ 25 phr of carbon black,
as the modified unsaturated oil in the process oil component is used:
a stoichiometrically complete or partial reaction product of an epoxide of an unsaturated fatty acid triglyceride with a molecule containing a nucleophilic group, wherein the molecule containing a nucleophilic group is a primary aromatic amine,
or a mixture thereof with an epoxide of an unsaturated fatty acid triglyceride
and the process oil component comprises ≥ 0 phr to ≤ 25 phr of treated distilled aromatic extract (TDAE), mild extracted solvate (MES) and naphthenic (NAP) oils,
wherein the unit "phr" denotes "per hundred parts by weight of rubber".

2. The rubber composition according to claim 1, wherein the unsaturated fatty acid triglyceride used as starting material for the modified unsaturated oil is a glyceride of α-linolenic acid, stearidonic acid, eicosapentaenoic acid, docosahexaenoic acid, linoleic acid, linolelaidic acid, γ-linolenic acid, dihomo-γ-linolenic acid, arachidonic acid, docosatetraenoic acid, palmitoleic acid, accenic acid, paullinic acid, oleic acid, elaidic acid, gondoic acid, erucic acid, nervonic acid, mead acid or a mixture thereof.

3. The rubber composition according to claim 1 or 2, wherein the unsaturated fatty acid triglyceride used as starting material for the modified unsaturated oil is olive oil, peanut oil, soybean oil, sesame oil, corn oil, sunflower oil, canola oil, palm oil or a mixture thereof.

4. The rubber composition according to one of claims 1 to 3, wherein the modified unsaturated oil comprises ≥ 1 mol-% to ≤ 10 mol-% of epoxy groups, based on the molar amount of unsaturated fatty acid trigliceride uses as starting material in its synthesis.

5. The rubber composition according to one of claims 1 to 4, wherein the modified unsaturated oil is the reaction product of ≥ 0.01 mol to ≤ 0.1 mol of the molecule containing a nucleophilic group per 1000 g of the epoxide of an unsaturated fatty acid triglyceride.

6. The rubber composition according to one of claims 1 to 5 comprising:
a) ≥ 50 phr to ≤ 100 phr of natural rubber (NR),
b) ≥ 0 phr to ≤ 50 phr of styrene butadiene rubber (SBR), butadiene rubber (BR), isoprene rubber (IR) or a mixture of at least two of the aforementioned rubbers,
c) ≥ 40 phr to ≤ 130 phr of silica,
d) ≥ 1 phr to ≤ 12 phr of bis[3-(triethoxysilyl)propyl] tetrasulfide (TESPT),
e) ≥ 5 phr to ≤ 20 phr of epoxidized palm oil, a reaction product of epoxidized palm oil with N-phenyl-p-phenylenediamine (PPD) or a mixture thereof,
f) ≥ 0 phr to ≤ 10 phr of carbon black,
g) ≥ 0 phr to ≤ 10 phr of treated distilled aromatic extract (TDAE), mild extracted solvate (MES) and naphthenic (NAP) oils.

7. A cross-linked rubber composition, **characterised in that** it is obtained by cross-linking a rubber composition according to one of claims 1 to 6.

8. The cross-linked rubber composition according to claim 7 with a difference in storage moduli G' at 0.56% elongation and 100% elongation of ≥ 250 kPa, the storage moduli being determined at a temperature of 100 °C and a frequency of 0.5 Hz.

9. The cross-linked rubber composition according to claim 7 or 8 with a tensile strength according to ASTM D412 of ≥ 24 MPa.

10. The cross-linked rubber composition according to one of claims 7 to 9 with an elongation at break according to ASTM D412 of ≥ 480%.

11. The cross-linked rubber composition according to one of claims 7 to 10 with a maximum of the tan delta value (determined from DMA measurements according to ISO 4664-1, frequency 10 Hz, 0.1% dynamic strain) at ≥ -80 °C to ≤ -20 °C.

12. The cross-linked rubber composition according to one of claims 7 to 10 with a tan delta at 0 °C of ≥ 0.1 to ≤ 0.15 (determined from DMA measurements according to ISO 4664-1, frequency 10 Hz, 0.1% dynamic strain) and a tan delta at 60 °C of ≥ ≥ 0.05 to ≤ 0.15 (determined from DMA measurements according to ISO 4664-1, frequency 10 Hz, 1 % dynamic strain).

13. A method of preparing a tyre, comprising the steps of:
- providing a tyre assembly comprising a cross-linkable rubber composition according to one of claims 1 to 6;
- cross-linking at least the cross-linkable rubber composition according to one of claims 1 to 6 in the tyre assembly.

14. A tyre comprising a tyre tread, **characterised in that** the tyre tread comprises a cross-linked rubber composition according to one of claims 7 to 12.

## Patentansprüche

1. Vernetzbare Kautschukzusammensetzung, wobei die vernetzbare Kautschukzusammensetzung Folgendes umfasst:
eine Kautschukkomponente aus der Gruppe Styrol-Butadien-Kautschuk (SBR), Polybutadien-Kautschuk (BR), Naturkautschuk (NR) oder einer Mischung davon; eine Füllstoffkomponente,
ein Silan-Kupplungsmittel und
eine Prozessölkomponente, umfassend ein ungesättigtes Fettsäuretriglycerid, wobei mindestens eine Kohlenstoff-Kohlenstoff-Doppelbindung im Molekül einer oder mehreren chemischen Reaktionen unterworfen wurde ("modifiziertes ungesättigtes Öl");
**dadurch gekennzeichnet, dass**
die Füllstoffkomponente Siliciumdioxid umfasst,
die Füllstoffkomponente ≥ 0 phr bis ≤ 25 phr Ruß umfasst, als das modifizierte ungesättigte Öl in der Prozessölkomponente:
ein Produkt der stöchiometrisch vollständigen oder teilweisen Reaktion eines Epoxids eines ungesättigten Fettsäuretriglycerids mit einem Molekül, das eine nucleophile Gruppe enthält, wobei es sich bei dem Molekül, das eine nucleophile Gruppe enthält, um ein primäres aromatisches Amin handelt, oder eine Mischung davon mit einem Epoxid eines ungesättigten Fettsäuretriglycerids verwendet wird
und die Prozessölkomponente ≥ 0 phr bis ≤ 25 phr TDAE-Öle (TDAE = Treated Distilled Aromatic Extract), MES-Öle (MES = Mild Extracted Solvate) und NAP-Öle (naphthenische Öle) umfasst,
wobei die Einheit "phr" für "pro hundert Gewichtsteile Kautschuk" steht.

2. Kautschukzusammensetzung nach Anspruch 1, wobei es sich bei dem als Ausgangsstoff für das modifizierte ungesättigte Öl verwendeten ungesättigten Fettsäuretriglycerid um ein Glycerid von α-Linolensäure, Stearidonsäure, Eicosapentaensäure, Docosahexaensäure, Linolsäure, Linolelaidinsäure, γ-Linolensäure, Dihomo-γ-Linolensäure, Arachidonsäure, Docosatetraensäure, Palmitoleinsäure, Vaccensäure, Paullinsäure, Ölsäure, Elaidinsäure, Gondosäure, Erucasäure, Nervonsäure, Meadscher Säure oder einer Mischung davon handelt.

3. Kautschukzusammensetzung nach Anspruch 1 oder 2, wobei es sich bei dem als Ausgangsstoff für das modifizierte ungesättigte Öl verwendeten ungesättigten Fettsäuretriglycerid um Olivenöl, Erdnussöl, Sojaöl, Sesamöl, Maisöl, Sonnenblumenöl, Canolaöl, Palmöl oder eine Mischung davon handelt.

4. Kautschukzusammensetzung nach einem der Ansprüche 1 bis 3, wobei das modifizierte ungesättigte Öl ≥ 1 Mol-% bis ≤ 10 Mol-% Epoxidgruppen, bezogen auf die molare Menge des als Ausgangsstoff bei seiner Synthese verwendeten ungesättigten Fettsäuretriglycerids, umfasst.

5. Kautschukzusammensetzung nach einem der Ansprüche 1 bis 4, wobei es sich bei dem modifizierten ungesättigten Öl um das Reaktionsprodukt von ≥ 0,01 mol bis ≤ 0,1 mol des Moleküls, das eine nucleophile Gruppe enthält, pro 1000 g des Epoxids eines ungesättigten Fettsäuretriglycerids handelt.

6. Kautschukzusammensetzung nach einem der Ansprüche 1 bis 5, umfassend:
a) ≥ 50 phr bis ≤ 100 phr Naturkautschuk (NR),
b) ≥ 0 phr bis ≤ 50 phr Styrol-Butadien-Kautschuk (SBR), Butadien-Kautschuk (BR), Isopren-Kautschuk (IR) oder einer Mischung von mindestens zwei der oben aufgeführten Kautschuke,
c) ≥ 40 phr bis ≤ 130 phr Siliciumdioxid,
d) ≥ 1 phr bis ≤ 12 phr Bis[3-(triethoxysilyl)propyl]tetrasulfid (TESPT),
e) ≥ 5 phr bis ≤ 20 phr von epoxidiertem Palmöl, einem Reaktionsprodukt von epoxidiertem Palmöl mit N-Phenyl-p-phenylendiamin (PPD) oder einer Mischung davon,
f) ≥ 0 phr bis ≤ 10 phr Ruß,
g) ≥ 0 phr bis ≤ 10 phr TDAE-Öl (TDAE = Treated Distilled Aromatic Extract), MES-Öl (MES = Mild Extracted Solvate) und naphthenische (NAP) Öle.

7. Vernetzte Kautschukzusammensetzung, **dadurch gekennzeichnet, dass** sie durch Vernetzen einer Kautschukzusammensetzung nach einem der Ansprüche 1 bis 6 erhalten wird.

8. Vernetzte Kautschukzusammensetzung nach Anspruch 7 mit einer Differenz der Speichermoduln G' bei 0,56 % Dehnung und 100 % Dehnung von ≥ 250 kPa, wobei die Speichermoduln bei einer Temperatur von 100 °C und einer Frequenz von 0,5 Hz bestimmt werden.

9. Vernetzte Kautschukzusammensetzung nach Anspruch 7 oder 8 mit einer Zugfestigkeit gemäß ASTM D412 von ≥ 24 MPa.

10. Vernetzte Kautschukzusammensetzung nach einem der Ansprüche 7 bis 9 mit einer Reißdehnung gemäß ASTM D412 von ≥ 480 %.

11. Vernetzte Kautschukzusammensetzung nach einem der Ansprüche 7 bis 10 mit einem Maximum des tan-delta-Werts (bestimmt aus DMA-Messungen gemäß ISO 4664-1, Frequenz 10 Hz, 0,1 % dynamische Dehnung) von ≥ -80 °C bis ≤ -20 °C.

12. Vernetzte Kautschukzusammensetzung nach einem der Ansprüche 7 bis 10 mit einem tan-delta-Wert bei 0 °C von ≥ 0,1 bis ≤ 0,15 (bestimmt aus DMA-Messungen gemäß ISO 4664-1, Frequenz 10 Hz, 0,1 % dynamische Dehnung) und einem tan-delta-Wert bei 60 °C von ≥ 0,05 bis ≤ 0,15 (bestimmt aus DMA-Messungen gemäß ISO 4664-1, Frequenz 10 Hz, 1 % dynamische Dehnung).

13. Verfahren zur Herstellung eines Reifens, das folgende Schritte umfasst:
- Bereitstellung einer Reifenanordnung, die eine vernetzbare Kautschukzusammensetzung nach einem der Ansprüche 1 bis 6 umfasst;
- Vernetzen mindestens der vernetzbaren Kautschukzusammensetzung nach einem der Ansprüche 1 bis 6 in der Reifenanordnung.

14. Reifen mit einer Reifenlauffläche, **dadurch gekennzeichnet, dass** die Reifenlauffläche eine vernetzte Kautschukzusammensetzung nach einem der Ansprüche 7 bis 12 umfasst.

## Revendications

1. Composition de caoutchouc réticulable, la composition de caoutchouc réticulable comprenant :
un composant caoutchouc choisi dans le groupe d'un caoutchouc de styrène-butadiène (SBR), un caoutchouc de polybutadiène (BR), un caoutchouc naturel (NR) ou un mélange correspondant ;
un composant charge,
un agent de couplage de type silane et
un composant huile de traitement comprenant un triglycéride d'acide gras insaturé où au moins une double liaison carbone-carbone dans la molécule a été soumise à une ou plusieurs réactions chimiques (« huile insaturée modifiée ») ;
**caractérisée en ce que**
le composant charge comprend une silice,
le composant charge comprend ≥ 0 phr à ≤ 25 phr de noir de carbone,
en tant que l'huile insaturée modifiée dans le composant huile de traitement est utilisé :
un produit de réaction stœchiométriquement terminée ou partielle d'un époxyde d'un triglycéride d'acide gras insaturé avec une molécule contenant un groupe nucléophile, la molécule contenant un groupe nucléophile étant une amine aromatique primaire,
ou un mélange correspondant avec un époxyde d'un triglycéride d'acide gras insaturé et le composant huile de traitement comprenant ≥ 0 phr à ≤ 25 phr d'extrait aromatique distillé traité (TDAE), de solvate extrait dans des conditions douces (MES) et d'huiles naphténiques (NAP),
l'unité « phr » désignant « par cent parties en poids de caoutchouc ».

2. Composition de caoutchouc selon la revendication 1, le triglycéride d'acide gras insaturé utilisé comme matière de départ pour l'huile insaturée modifiée étant un glycéride d'acide α-linolénique, d'acide stéaridonique, d'acide éicosapentaénoïque, d'acide docosahexaénoïque, d'acide linoléique, d'acide linolélaïdique, d'acide γ-linolénique, d'acide dihomo-γ-linolénique, d'acide arachidonique, d'acide docosatétraénoïque, d'acide palmitoléique, d'acide accénique, d'acide paullinique, d'acide oléique, d'acide élaïdique, d'acide gondoïque, d'acide érucique, d'acide nervonique, d'acide de Mead ou un mélange correspondant.

3. Composition de caoutchouc selon la revendication 1 ou 2, le triglycéride d'acide gras insaturé comme matière de départ pour l'huile insaturée modifiée étant l'huile d'olive, l'huile d'arachide, l'huile de soja, l'huile de sésame, l'huile de maïs, l'huile de tournesol, l'huile de canola, l'huile de palme ou un mélange correspondant.

4. Composition de caoutchouc selon l'une quelconque des revendications 1 à 3, l'huile insaturée modifiée comprenant ≥ 1 % en moles à ≤ 10 % en moles de groupes époxy, sur la base de la quantité molaire de triglycéride d'acide gras insaturé utilisé comme matière de départ dans sa synthèse.

5. Composition de caoutchouc selon l'une quelconque des revendications 1 à 4, l'huile insaturée modifiée étant le produit de réaction de ≥ 0,01 mole à ≤ 0,1 mole de la molécule contenant un groupe nucléophile par 1 000 g de l'époxyde d'un triglycéride d'acide gras insaturé.

6. Composition de caoutchouc selon l'une quelconque des revendications 1 à 5 comprenant :
a) ≥ 50 phr à ≤ 100 phr de caoutchouc naturel (NR),
b) ≥ 0 phr à ≤ 50 phr de caoutchouc de styrène butadiène (SBR), de caoutchouc de butadiène (BR), de caoutchouc d'isoprène (IR) ou d'un mélange d'au moins deux des caoutchoucs mentionnés précédemment,
c) ≥ 40 phr à ≤ 130 phr de silice,
d) ≥ 1 phr à ≤ 12 phr de tétrasulfure de bis[3-(triéthoxysilyl)propyle] (TESPT),
e) ≥ 5 phr à ≤ 20 phr d'huile de palme époxydée, d'un produit de réaction d'une huile de palme époxydée avec la N-phényl-p-phénylènediamine (PPD) ou un mélange correspondant,
f) ≥ 0 phr à ≤ 10 phr de noir de carbone,
g) ≥ 0 phr à ≤ 10 phr d'extrait aromatique distillé traité (TDAE), de solvate extrait dans des conditions douces (MES) et d'huiles naphténiques (NAP).

7. Composition de caoutchouc réticulée, **caractérisée en ce qu'**elle est obtenue par réticulation d'une composition de caoutchouc selon l'une des revendications 1 à 6.

8. Composition de caoutchouc réticulée selon la revendication 7 dotée d'une différence du module de conservation G' à 0,56 % d'élongation et 100 % d'élongation de ≥ 250 kPa, le module de conservation étant déterminé à une température de 100 °C et une fréquence de 0,5 Hz.

9. Composition de caoutchouc réticulée selon la revendication 7 ou 8 dotée d'une résistance en traction selon la norme ASTM D412 de ≥ 24 MPa.

10. Composition de caoutchouc réticulée selon l'une quelconque des revendications 7 à 9 dotée d'une élongation à la rupture selon la norme ASTM D412 de ≥ 480 %.

11. Composition de caoutchouc réticulée selon l'une quelconque des revendications 7 à 10 dotée d'un maximum de la valeur de tan delta (déterminée à partir de mesures de DMA selon la norme ISO 4664-1, fréquence 10 Hz, 0,1 % de contrainte dynamique) à ≥ -80 °C à ≤ -20 °C.

12. Composition de caoutchouc réticulée selon l'une quelconque des revendications 7 à 10 dotée d'un tan delta à 0 °C de ≥ 0,1 à ≤ 0,15 (déterminé à partir de mesures de DMA selon la norme ISO 4664-1, fréquence 10 Hz, 0,1 % de contrainte dynamique) et d'un tan delta à 60 °C de ≥ 0,05 à ≤ 0,15 (déterminé à partir de mesures de DMA selon la norme ISO 4664-1, fréquence 10 Hz, 1 % de contrainte dynamique).

13. Procédé de préparation d'un pneu, comprenant les étapes de :
- fourniture d'un ensemble de pneu comprenant une composition de caoutchouc réticulable selon l'une des revendications 1 à 6 ;
- réticulation d'au moins la composition de caoutchouc réticulable selon l'une des revendications 1 à 6 dans l'ensemble de pneu.

14. Pneu comprenant une bande de roulement, **caractérisé en ce que** la bande de roulement comprend une composition de caoutchouc réticulée selon l'une des revendications 7 à 12.
